# EUROPEAN PATENT APPLICATION

(11) **EP 2 372 409 A1**
(43) Date of publication of application: **05.10.2011**
(21) Application number: 11159508.8
(22) Date of filing: 24.03.2011
(51) Int. Cl.: G02B 5/20, G02B 5/30, G02F 1/1335

(54) **Display filter and digital information display including the same**

(30) Priority: 25.03.2010 KR 20100026726
(71) Applicant: Samsung Corning Precision Materials Co., Ltd., Gyeongsangbuk-do Gumi-si, 730-735 (KR)
(72) Inventor: Park, Dong Hyun, Asan-si 336-841 (KR); Kim, Jong Taek, Seoul 135-821 (KR); Park, Cheol Hee, Seoul 135-821 (KR); Park, Dae Chul, Seoul 135-821 (KR)
(74) Representative: Gulde Hengelhaupt Ziebig & Schneider

(57) **Abstract**

A display filter includes a transparent substrate (111) and a first polarizer film (112). The first polarizer film allows only a component of ambient light that has passed through the transparent substrate to pass through, the component being parallel to a first polarizer axis.

## Description

### CROSS REFERENCE TO RELATED APPLICATION

The present application claims priority from Korean Patent Application Number 10-2010-0026726 filed on March 25, 2010, the entire contents of which application are incorporated herein for all purposes by this reference.

### BACKGROUND OF THE INVENTION

### Field of the Invention

The present invention relates to a Digital Information Display (DID), and more particularly, to a display filter and a DID including the same, the display filter being capable of preventing the DID from damage due to exposure to Ultraviolet (UV) or Infrared (IR) radiation from sunlight and increasing visibility when the DID is used outdoors.

### Description of Related Art

Recently, DIDs are widely used in open places such as department stores, hotels, airports, hospitals, exhibition halls, parks, libraries, bus and subway stations, elevators, and the like. DIDs are widely used as an advertising medium for advertising products and brand-name manufactured products, or as a TV medium for delivering broadcast information such as news and sports.

DIDs are represented by Liquid Crystal Displays (LCDs). As is known in the art, LCDs are display devices that use liquid crystal molecules disposed between two thin glass plates, the characteristics of the liquid crystal molecules intermediating between solid and liquid characteristics, and display images by forming light and dark areas by changing the orientation of the liquid crystal molecules when electrical current is supplied thereto.

However, when the LCD is used as the DID, which is disposed outdoors, the optical film of the LCD is frequently damaged by Ultraviolet (UV) radiation, or the liquid crystal is frequently damaged by Infrared (IR) radiation from sunlight. In addition, there is a problem in that visibility decreases since the sunlight is reflected from the front surface.

The information disclosed in this Background of the Invention section is only for the enhancement of understanding of the background of the invention, and should not be taken as an acknowledgment or any form of suggestion that this information forms a prior art that would already be known to a person skilled in the art.

### BRIEF SUMMARY OF THE INVENTION

Various aspects of the present invention provide a display filter and a Digital Information Display (DID) including the same, the display filter being capable of preventing liquid crystals or an optical film from damage due to exposure to Ultraviolet (UV) or Infrared (IR) radiation from sunlight when the DID is used outdoors.

Also provided is a display filter that can realize increased visibility and a DID including the same.

In an aspect of the present invention, the display filter includes a transparent substrate, an ambient light shield layer, a first polarizer film, and a second polarizer film. The ambient light shield layer blocks Ultraviolet (UV) or Infrared (IR) radiation included in ambient light that has passed through the transparent substrate.

The first polarizer film allows only a component of the ambient light that has sequentially passed through the transparent substrate and the ambient light shield layer to pass through, the component being parallel to a first polarizer axis.

In the display filter, since the first polarizer film allows only a component of the ambient light that has sequentially passed through the transparent substrate and the ambient light shield layer to pass through, the component being parallel to the first polarizer axis, it reduces the amount of UV or IR radiation that reaches the liquid crystal display panel by absorbing or reflecting a portion of ambient light that has reached the display panel, e.g. a liquid crystal display panel. Accordingly, the display filter has advantages in that it increases visibility, and decreases the exposure of liquid crystals and an optical film to UV or IR radiation from sunlight, thereby preventing the liquid crystals and the optical film from damage.

Preferably the ambient light shield layer is formed as a multilayer transparent conductive film that includes high-refractivity transparent thin films and metal thin films, which are repeatedly stacked on one another. Preferably, the high-refractivity transparent thin films comprise a refractive index of more than 1.5, more preferably of more than 1.7 and still more preferably of more than 2.0 for light having a wavelength of 550 nm.

Preferably the ambient light shield layer is formed as a polymer resin film that contains an ultraviolet-blocking material and an infrared-absorbing material.

Preferably the ambient light shield layer is formed as an adhesive that contains an ultraviolet-blocking material and an infrared-absorbing material.

Preferably the display filter comprises a transmittance of 15% or less in an infrared range of 880nm or more of the ambient light, and a transmittance of 5% or less in an ultraviolet range of 380nm or less of the ambient light.

Preferably the second polarizer film is disposed in rear of the first polarizer film and adapted to allow a component of ambient light to pass through, the component of ambient light being parallel to a second polarizer axis, wherein an angle defined between the first polarizer axis of the first polarizer film and the second polarizer axis of the second polarizer film ranges from -5° to +5°.

In another aspect of the present invention, the display filter includes a transparent substrate, an ambient light shield layer, a first phase difference film, and a second phase difference film. The ambient light shield layer blocks Ultraviolet (UV) or Infrared (IR) radiation included in ambient light that has passed through the transparent substrate. The first phase difference film produces a phase difference in the ambient light that has sequentially passed through the transparent substrate and the ambient light shield layer. The second phase difference film is disposed between the first phase difference film and the display panel, and reflects light that has passed through the first phase difference film.

In the display filter, the first phase difference film and the second phase difference film reduce the reflection of ambient light by producing a phase difference in the ambient light that has sequentially passed through the transparent substrate and the ambient light shield layer. Accordingly, the display filter has advantages in that it increases visibility, and decreases the exposure of liquid crystals and an optical film to UV or IR radiation from sunlight, thereby preventing the liquid crystals and the optical film from damage.

Preferably the phase difference film is a λ/4 phase difference film.

Preferably the first phase difference film is formed on a rear surface of the first polarizer film, and the second phase difference film is formed on a front surface of a display panel and is spaced apart from the first phase difference film.

Preferably the transparent substrate and the first polarizer film are spaced apart from a display panel.

In a further aspect of the present invention, the DID includes a display panel and the above-described display filter disposed in front of the display panel.

Accordingly, the DID has advantages in that the display filter increases visibility, and decreases the exposure of liquid crystals and an optical film to UV or IR radiation from sunlight, thereby preventing the liquid crystals and the optical film from damage.

The methods and apparatuses of the present invention have other features and advantages which will be apparent from, or are set forth in greater detail in the accompanying drawings, which are incorporated herein, and in the following Detailed Description of the Invention, which together serve to explain certain principles of the present invention.

### BRIEF DESCRIPTION OF THE DRAWINGS

FIG. 1 is a schematic view showing a Digital Information Display (DID) including a display filter according to a first exemplary embodiment of the present invention;

FIG. 2 is a schematic view showing a DID including a display filter according to a second exemplary embodiment of the present invention;

FIG. 3 is a schematic view showing a DID including a display filter according to a third exemplary embodiment of the present invention; and

FIG. 4 is a graph showing the light transmittance characteristics of a display filter according to an exemplary embodiment of the invention.

### DETAILED DESCRIPTION OF THE INVENTION

Reference will now be made in detail to various embodiments of the present invention, examples of which are illustrated in the accompanying drawings and described below. While the invention will be described in conjunction with exemplary embodiments, it is to be understood that the present description is not intended to limit the invention to those exemplary embodiments. On the contrary, the invention is intended to cover not only the exemplary embodiments, but also various alternatives, modifications, equivalents and other embodiments that may be included within the scope of the invention as defined by the appended claims.

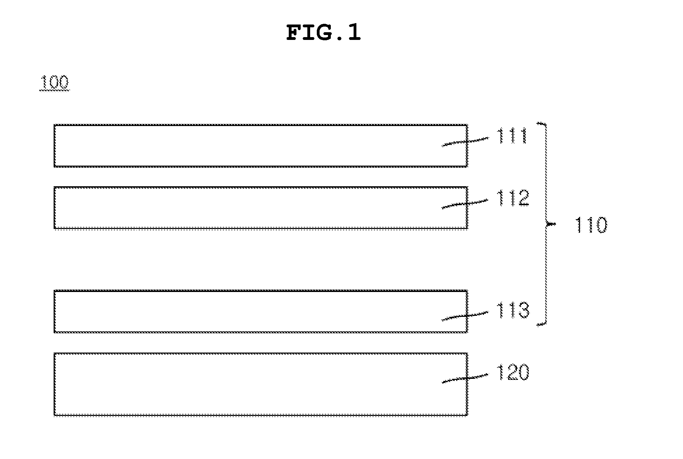

FIG. 1 is a schematic view showing a Digital Information Display (DID) including a display filter according to a first exemplary embodiment of the present invention.

As shown in FIG. 1, a DID 100 of this embodiment generally includes a display filter 110 and a display panel 120. In this disclosure, the display panel is represented by a liquid crystal display panel. The display filter 110 includes a transparent substrate 111, a first polarizer film 112, and a second polarizer film 113. The second polarizer film can be omitted. Although FIG. 1 shows an example in which the transparent substrate, the first polarizer film, and the second polarizer film are sequentially stacked from the front, the sequence in which these components are stacked can be changed.

The transparent substrate 111 can be made of any material as long as it has excellent light transmittance and excellent mechanical properties. In an example, the transparent substrate 111 can be formed as a thermosetting or UV-curable organic film, which is generally made of one of the polymer-based materials including, but not limited to, Polyethylene Terephthlate (PET), acrylate, Polycarbonate (PC), Urethane Acrylate (UA), polyester, Epoxy Acrylate (EA), and Polyvinyl Chloride (PVC). In addition, the transparent substrate 111 can be formed as a sheet of tempered glass that is made of soda-lime glass, aluminosilicate glass (SiO₂-Al₂O-Na₂O), or the like. Here, the amounts of Na and Fe can be adjusted to be low depending on the application.

The first polarizer film 112 allows a component of ambient light that has passed through the transparent substrate 111 to pass through, the component being parallel to the first polarizer axis, but absorbs or reflects the remaining components of the ambient light. The second polarizer film 113 is disposed between the first polarizer film 112 and the display panel 120. Here, the angle defined between the first polarizer axis of the first polarizer film 112 and the second polarizer axis of the second polarizer film is characterized by being in the range from -5° to +5°.

In the case in which the display panel is a liquid crystal display panel, a front polarizer film is provided in front of the panel. Here, it is preferred that the angle defined between the polarizer axis of the front polarizer film and the first polarizer axis be in the range from -5° to +5°.

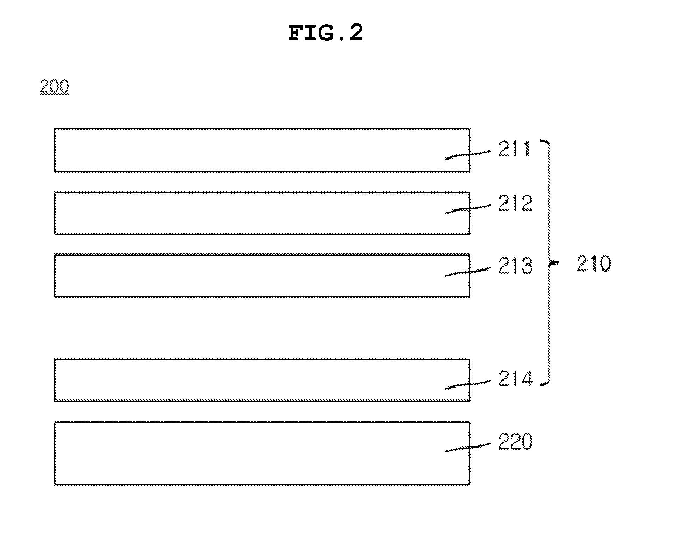

FIG. 2 is a schematic view showing a DID including a display filter according to a second exemplary embodiment of the present invention.

As shown in FIG. 2, a DID 200 of this embodiment generally includes a display filter 210 and a liquid crystal display panel 220. The display filter 210 includes a transparent substrate 211, an ambient light shield layer 212, a first polarizer film 213, and a second polarizer film 214. The second polarizer film can be omitted. Although FIG. 2 shows an example in which the transparent substrate, the ambient light shield layer, the first polarizer film, and the second polarizer film are sequentially formed from the front, the sequence in which these components are stacked can be changed.

The ambient light shield layer 212 serves to block Ultraviolet (UV) or Infrared (IR) radiation, which is included in ambient light that has passed through the transparent substrate 211. In an example, the ambient light shield layer 212 can be formed as a transparent conductive film.

The transparent conductive film is a multilayer thin film in which high-refractivity transparent thin films and metal thin films are repeatedly stacked on one another. Each high-refractivity transparent thin film can be made of one of the materials including, but not limited to, Indium Tin Oxide (ITO), niobium pentoxide (Nb₂O₅), and indium oxide (In₂O₅). Each metal thin film can be made of a material that has a high light transmittance in the visible light range and a high light reflectivity in the IR range. In an example, the metal thin film can be made of Ag or an Ag alloy. The transparent conductive film may also include a protective thin film between the high-refractivity transparent thin film and the metal thin film. The protective thin film serves to reduce the compressive strength of the high-refractivity transparent thin film, or prevent oxygen from diffusing into the metal thin film through the high-refractivity transparent thin film. In an example, the protective thin film can be made of one of the materials including, but not limited to, Al, Cr, and Ni.

In another example, the ambient light shield layer 212 can be made of a polymer resin film or an adhesive that contains both a UV-blocking material and an IR-absorbing material. This polymer resin can be one of the materials including, but not limited to, Polyethylene Terephthalate (PET), Polycarbonate (PC), Urethane Acrylate (UA), polyester, Epoxy Acrylate (EA), and Triacetyl Cellulose (TAC). The adhesive is generally a semisolid (highly viscous) liquid pressure-sensitive adhesive, and can be formed as a thermoplastic elastomer-based adhesive, such as an acrylic resin, a Styrene-Butadiene-Styrene (SBS) block polymer, or a Styrene-Ethylene-Butadiene-Styrene (SEBS) block polymer.

In general, the UV-blocking material can be generally divided into an organic material and an inorganic material. The inorganic UV-blocking material can be selected from among titanium dioxide, zinc oxide, manganese oxide, zirconium dioxide, cerium dioxide, and the like, which have a particle diameter ranging from 50nm to 200nm. The organic UV-blocking material can be selected from among p-aminobenzoic acid derivatives, cinamic acid derivatives, benzophenone derivatives, benzotriazole derivatives, and the like.

The IR-absorbing material can be at least one selected from among a di-immonium colorant, a compound colorant containing copper ion and zinc ion, a cyanic colorant, an anthraquinone colorant, a squarylium colorant, an azomethine colorant, an azo colorant, and a benzylidene compound colorant. In an example, the IR-absorbing material may contain a di-immonium-based IR-absorbing colorant in an amount from 1.0wt% to 2.0wt%. Here, the di-immonium-based IR-absorbing colorant is a di-immonium colorant that is available from Carlit of Japan with the product name CIR 1085 di-immonium.

The first polarizer film 213 allows a component of ambient light that has passed through the transparent substrate 211 to pass through, the component being parallel to the first polarizer axis, but absorbs or reflects the remaining components of the ambient light. The second polarizer film 214 is disposed between the first polarizer film 213 and the display panel 220. Here, the angle defined between the first polarizer axis of the first polarizer film 213 and the second polarizer axis of the second polarizer film is characterized by being in the range from -5° to +5°.

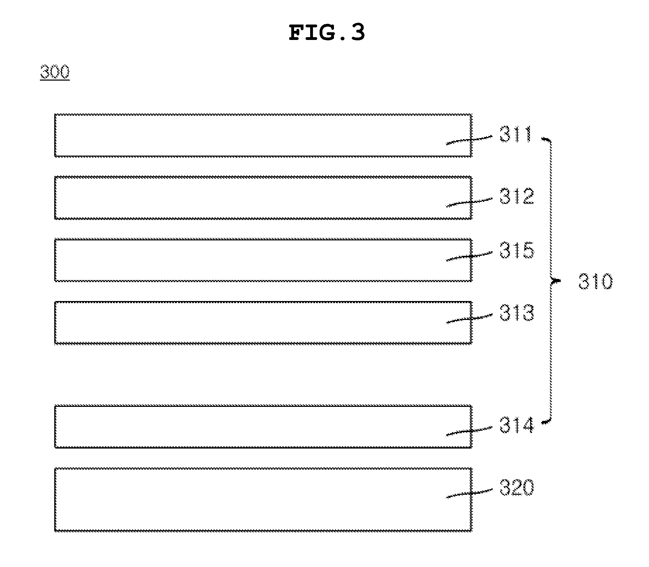

FIG. 3 is a schematic view showing a DID including a display filter according to a third exemplary embodiment of the present invention.

As shown in FIG. 3, a DID 300 of this embodiment generally includes a display filter 310 and a display panel 320. The display filter 310 includes a transparent substrate 311, an ambient light shield layer 312, a first polarizer film 315, a first phase difference film 313, and a second phase difference film 314. Although FIG. 3 shows an example in which the transparent substrate 311, the ambient light shield layer 312, the first polarizer film 315, the first phase difference film 313, and the second phase difference film 314 are sequentially formed from the front, the sequence in which these components are stacked can be changed. Here, the first polarizer film 315 is required to be positioned in front of the first and second phase difference films 313, 314. The ambient light shield film 312 and the second phase difference film 314 can be omitted. Although an example in which the first phase difference film 313 is formed on the rear surface of the first polarizer film 315 and the second phase difference film 314 is formed on the front surface of the display panel 320 is shown, this is not intended to be limiting.

The first and second phase difference films 213 and 214 (and 313 and 314) serve to produce a phase difference in ambient light by imparting a phase difference of a predetermined wavelength to two polarization components that are parallel to the optical axis of the film and are perpendicular to each other. Since the phase difference film has a slow axis and a fast axis, when light passes through the phase difference film, the phase of a light component that is directed along the fast axis is faster than that of a light component that is directed along the slow axis. A 1/2 wavelength phase difference film is a film that causes the phase difference between the slow axis and the fast axis of light that has passed through the film to be a 1/2 wavelength, and a 1/4 wavelength phase difference film is a film that causes the phase difference between the slow axis and the fast axis of light that has passed through the film to be a 1/4 wavelength.

In the ambient light, only a linear polarization component that is parallel to the first polarizer axis passes through the first polarizer film. Afterwards, the linear polarization component is converted into circularly polarized light while passing through the first phase difference film. The circularly polarized light is then redirected by being reflected from the rear surface of the first phase difference film, the front surface of the second phase difference film, and the like. Afterwards, the circularly polarized light is converted into linearly polarized light while passing through the first phase difference film. Here, the polarization orientation becomes perpendicular to the first phase difference film. Accordingly, the ambient light cannot pass through the first polarizer film.

The first phase difference film 213, 313 and the second phase difference film 214, 314 can be formed as an oriented film or a liquid crystal film. The oriented film is made of a polymer, such as Polycarbonate (PC) or a norbornene-based material, which exhibits anisotropy when stretched. The oriented film can be formed as a uniaxial oriented film or a biaxial oriented film depending on the number of anisotropic axes. The uniaxial oriented film has a phase difference in the surface thereof, whereas the biaxial oriented film also has a phase difference in the thickness direction thereof. The oriented film can also be formed as a reciprocal dispersion film, in which birefringence at shorter wavelengths is smaller than birefringence at longer wavelengths. Here, the reciprocal dispersion film can be formed as a multilayer film, in which reciprocal dispersion characteristics are realized by combining two sheets of norbornene-based films, or a film that is made of modified polycarbonate having reciprocal dispersion characteristics.

The liquid crystal film is a film that is made of liquid molecules like a liquid crystal cell, and has a higher order structure that cannot be obtained by stretching. The liquid crystal film can be formed as a disc-shaped liquid crystal film that is made of a triphenylene-based liquid crystal compound, or as a bar-shaped liquid crystal film, in which hybrid nematic orientation of liquid crystals is fixed. In this liquid crystal film, the orientation of liquid crystal molecules continuously changes along the thickness direction of the film. Accordingly, the liquid crystal film is characterized in that its optical design can be made to be symmetrical to the orientation structure of liquid crystal molecules in a liquid crystal cell.

In the case in which the display panel is a liquid crystal display panel, a front polarizer film is provided in front of the panel. Here, in the event in which 1/4 wavelength phase difference films are used for the first phase difference film and the second phase difference film, it is preferred that the angle defined between the polarizer axis of the front polarizer film and the first polarizer axis be in the range from 85° to 95°.

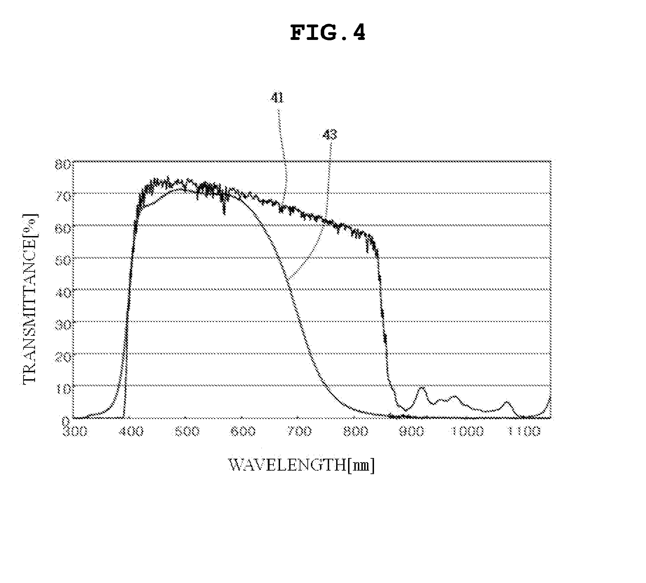

FIG. 4 is a graph showing the light transmittance characteristics of a display filter according to an exemplary embodiment of the invention.

Here, reference numeral 41 designates a light transmission graph of a display filter of the related art, in which a tanning film is disposed on a transparent substrate, whereas reference numeral 43 is a light transmission graph of a display filter according to an exemplary embodiment of the invention, which includes a transparent substrate, a transparent conductive film, in which four high reflectivity transparent thin films and four metal thin films are repeatedly stacked on each other, a polarizer film, a first phase difference film, and a second phase difference film.

Describing the transmittance characteristics of the display filter 43 of the present invention exhibits, as shown in FIG. 4, its transmittance is 15% or less in the IR range of 880nm or more of ambient light and is 5% or less in the UV range of 380nm or less of ambient light.

When the visibilities of the display filter 43 of the invention and the display filter 41 of the related art were measured as bright room contrast ratios at a luminance of 8,000 luxes, which is similar to that of the outdoor environment, the bright room contrast ratio of the display filter 41 of the related art was measured to be 50:1, and the bright room contrast ratio of the display filter 43 of the invention was measured to be 250:1.

Accordingly, it can be understood that the display filter 43 of the invention has a low transmittance for IR and UV radiation and excellent visibility.

The foregoing descriptions of specific exemplary embodiments of the present invention have been presented for the purposes of illustration and description. They are not intended to be exhaustive or to limit the invention to the precise forms disclosed, and obviously many modifications and variations are possible in light of the above teachings. The exemplary embodiments were chosen and described in order to explain certain principles of the invention and their practical application, to thereby enable others skilled in the art to make and utilize various exemplary embodiments of the present invention, as well as various alternatives and modifications thereof. It is intended that the scope of the invention be defined by the claims appended hereto and their equivalents.

## Claims

1. A display filter (110, 210, 310) adapted to be disposed in front of a display panel, comprising:
a transparent substrate (111, 211, 311); and
a first polarizer film (112, 213, 315) supported on the transparent substrate (111, 211, 311), wherein the first polarizer film (112, 213, 315) is adapted to allow only a component of incident ambient light to pass through, the component of incident ambient light being parallel to a first polarizer axis.

2. The display filter of claim 1, further comprising an ambient light shield layer (212, 312), wherein the ambient light shield layer (212, 312) is adapted to block ultraviolet and infrared radiation included in the incident ambient light.

3. The display filter of claim 2, wherein the ambient light shield layer (212, 312) is formed as a multilayer transparent conductive film that includes high-refractivity transparent thin films and metal thin films, which are repeatedly stacked on one another.

4. The display filter of claim 2, wherein the ambient light shield layer (212, 312) is formed as a polymer resin film that contains an ultraviolet-blocking material and an infrared-absorbing material.

5. The display filter of claim 2, wherein the ambient light shield layer (212, 312) is formed as an adhesive that contains an ultraviolet-blocking material and an infrared-absorbing material.

6. The display filter according to any one of claims 2 to 5, wherein the display filter (110, 210, 310) comprises a transmittance of 15% or less in an infrared range of 880nm or more of the ambient light, and a transmittance of 5% or less in an ultraviolet range of 380nm or less of the ambient light.

7. The display filter according to any one of the preceding claims, further comprising a second polarizer film (113, 214) disposed in rear of the first polarizer film (112, 213, 315), the second polarizer film (113, 214) being adapted to allow a component of ambient light to pass through, the component of ambient light being parallel to a second polarizer axis,
wherein an angle defined between the first polarizer axis of the first polarizer film (112, 213, 315) and the second polarizer axis of the second polarizer film (113, 214) ranges from -5° to +5°.

8. The display filter according to any one of the preceding claims, further comprising a phase difference film (313, 314) disposed in rear of the first polarizer film (112, 213, 315).

9. The display filter of claim 8, wherein the phase difference film (313, 314) is a λ/4 phase difference film.

10. The display filter according to any one of claims 8 and 9, wherein the phase difference film includes a first phase difference film (313) and a second phase difference film (314).

11. The display filter of claim 10, wherein the first phase difference film (313) is formed on a rear surface of the first polarizer film (112, 213, 315), and the second phase difference film (314) is formed on a front surface of a display panel (120, 220, 320) and is spaced apart from the first phase difference film (313).

12. The display filter according to any one of the preceding claims, wherein the transparent substrate (111, 211, 311) and the first polarizer film (112, 213, 315) are spaced apart from a display panel (120, 220, 320).

13. A digital information display comprising a display panel (120, 220, 320) and a display filter (110, 210, 310) according to any one of the preceding claims.

14. The digital information display of claim 13, wherein:
the display panel (120, 220, 320) is a liquid crystal display panel having a front polarizer film attached to a front surface thereof,
the display filter (110, 210, 310) includes a first phase difference film (313) and a second phase difference film (314) in rear of the first polarizer film (112, 213, 315), wherein the first phase difference film (313) and the second phase difference film (314) are a λ/4 phase difference film, and
an angle defined between a polarizer axis of the front polarizer film of the display panel (120, 220, 320) and the first polarizer axis of the first polarizer film (112, 213, 315) of the display filter (110, 210, 310) ranges from 85° to 95°.
